# EUROPÄISCHE PATENTANMELDUNG

(11) **EP 4 458 657 A1**
(43) Veröffentlichungstag der Anmeldung: **06.11.2024**
(21) Anmeldenummer: 24172944.1
(22) Anmeldetag: 29.04.2024
(51) Int. Cl.: B62K 23/06, B62K 25/08, B62K 25/28, B62K 3/00, B62K 25/04, B62K 21/12

(54) **FAHRRADEINRICHTUNG MIT EINSTELLBAREN BETRIEBSZUSTÄNDEN**

(30) Priorität: 05.05.2023 DE 102023111795
(71) Anmelder: DT Swiss AG, 2504 Biel (CH)
(72) Erfinder: Zbinden, Samuel, CH-2503 Biel (CH); Hoffmann, Jerome, CH-2562 Port (CH)
(74) Vertreter: BSB Patentanwälte Schütte & Engelen Partnerschaft mbB

(57) **Zusammenfassung**

Fahrradeinrichtung (1) mit einer Fahrradkomponente (2) mit zwei einstellbaren unterschiedlichen Betriebszuständen (3, 4) und einer an der Fahrradkomponente (2) aufgenommenen Stelleinrichtung (5) zum Einstellen der Betriebszustände. Die Stelleinrichtung (5) umfasst ein Ventil (15), welches in einer ersten Stellung (16) einen Strömungskanal (18) weiter öffnet als in einer zweiten Stellung (17). Die Stelleinrichtung (5) umfasst einen drehbaren Stellmechanismus (6), der für die beiden unterschiedlichen Betriebszustände (3, 4) jeweils eine unterschiedliche Stellposition (13, 14) aufweist, sodass von einem ersten Betriebszustand (3) zu einem zweiten Betriebszustand (4) in eine Drehrichtung (7) und von dem zweiten Betriebszustand (4) in dieselbe Drehrichtung (7) zu dem ersten Betriebszustand (3) weiter gedreht werden kann.

## Beschreibung

Die vorliegende Erfindung betrifft eine Fahrradeinrichtung mit einer Fahrradkomponente mit wenigstens zwei einstellbaren unterschiedlichen Betriebszuständen. Dabei ist an der Fahrradkomponente eine Stelleinrichtung zum Einstellen der Betriebszustände aufgenommen oder darin integriert.

Im Stand der Technik sind verschiedenste Fahrräder und Fahrradkomponenten bekannt geworden, bei denen unterschiedliche Betriebszustände einstellbar sind. So sind beispielsweise Mountainbikes bekannt geworden, die Federgabeln als Fahrradkomponenten aufweisen und bei denen ein Fahrmodus einstellbar ist. So kann der Fahrer in Abhängigkeit von dem Gelände die Federgabel in einen geeigneten Modus schalten.

Die unterschiedlichen Modi bewirken zum Beispiel eine sehr straffe oder nahezu blockierte Federgabel für Fahrten auf der Straße oder eine sehr feinfühlig reagierende Federgabel für Fahrten im Gelände. Diese Fahrmodi können normalerweise entweder am oberen Bereich der Federgabel, der Gabelkrone, oder über einen Remote-Hebel verstellt werden, welcher am Lenker angebracht wird. Der Remote-Hebel ist dabei so angeordnet, dass die Hand nicht vom Lenker entfernt werden muss, um den Hebel zu bedienen. Dabei wird beim Drücken des Remote-Hebels dessen Position verändert, wobei er dann in einer gedrückten Position verbleibt, bis ein zweiter Rückstellhebel betätigt wird.

Federgabeln werden nicht nur an Mountainbikes eingesetzt, sondern seit einiger Zeit auch an sogenannten Gravel-Bikes. Gravel-Bikes sind eine Art von Rennrädern mit breiteren Reifen, um damit auch auf Kieswegen und im leichten Gelände fahren zu können. Gravel-Bikes weisen regelmäßig auch einen geschwungenen Lenker wie ein Rennrad auf. Der geschwungene Lenker ermöglicht viele verschiedene Handpositionen. Die Brems- und Schalteinheiten sind dabei so konzipiert, dass sie aus zwei Hauptgriffpositionen erreichbar sind. Typische Gravel-Bikes mit Federgabeln besitzen oft eine Fahrmodus-Verstellung an der Gabelkrone oder am oberen Ende des Schaftrohrs. Für beide Optionen muss die Hand vom Lenker genommen werden, um den Fahrmodus zu verstellen.

An Rennradlenkern bei Gravel-Bikes sind auch Remote-Hebel zur Sattelhöhenverstellung bekannt geworden, die am Lenker montiert sind und die aus den beiden Hauptgriffpositionen erreichbar sind. Der Remote-Hebel ist als Taster realisiert und öffnet bei Betätigung einen Sperrmechanismus, wodurch eine Sattelhöhenverstellung während der Fahrt möglich ist.

Nicht nur bei Mountainbikes, sondern auch bei Gravel-Bikes ist es insbesondere bei sportlichem Fahren von Vorteil, wenn die Hand zum Einstellen eines Fahrmodus nicht vom Lenker genommen werden muss. Wenn die unterschiedlichen Einrichtungen aber aus den beiden Haupt-Griffpositionen bedienbar sein sollen, wird der zur Verfügung stehende Platz an einem Lenker knapp.

Es ist deshalb die Aufgabe der vorliegenden Erfindung eine Fahrradeinrichtung mit einer Fahrradkomponente mit wenigstens zwei einstellbaren unterschiedlichen Betriebszuständen zur Verfügung zu stellen, wobei die Auswahl und Einstellung des Betriebszustandes relativ einfach ist und die Einstellung gegebenenfalls aus unterschiedlichen Positionen ermöglicht wird.

Diese Aufgabe wird gelöst durch eine Fahrradeinrichtung mit den Merkmalen des Anspruchs 1. Bevorzugte Weiterbildungen sind Gegenstand der Unteransprüche. Weitere Vorteile und Merkmale der vorliegenden Erfindung ergeben sich aus der allgemeinen Beschreibung und der Beschreibung der Ausführungsbeispiele.

Eine erfindungsgemäße Fahrradeinrichtung umfasst wenigstens eine Fahrradkomponente mit (wenigstens) zwei einstellbaren unterschiedlichen Betriebszuständen und eine an der Fahrradkomponente aufgenommene und insbesondere darin integrierte Stelleinrichtung zum Einstellen der Betriebszustände. Die Stelleinrichtung umfasst vorzugsweise ein Ventil, welches in einer ersten Stellung einen Strömungskanal weiter öffnet als in einer zweiten Stellung. Dabei umfasst die Stelleinrichtung einen drehbaren Stellmechanismus, der für die (beiden) unterschiedlichen Betriebszustände jeweils eine unterschiedliche Stellposition aufweist. Dabei kann die Stelleinrichtung von einem ersten Betriebszustand zu (wenigstens) einem zweiten Betriebszustand durch Drehen in eine Drehrichtung überführt werden. Um die Fahrradkomponente wieder in den ersten Betriebszustand zu überführen, kann der Stellmechanismus in dieselbe Drehrichtung weiter gedreht werden. Das bedeutet, dass von einem ersten Betriebszustand zu einem zweiten Betriebszustand der Stellmechanismus in eine bestimmte Drehrichtung gedreht werden kann, und, dass der Stellmechanismus in dieselbe Drehrichtung weiter gedreht werden kann, um von dem zweiten Betriebszustand wieder in den ersten Betriebszustand zu schalten.

Die erfindungsgemäße Fahrradeinrichtung hat viele Vorteile. Ein erheblicher Vorteil der erfindungsgemäßen Fahrradeinrichtung besteht darin, dass zum Ändern und zum Umschalten eines Betriebszustandes ein Stellmechanismus einer Stelleinrichtung an der Fahrradkomponente gedreht werden kann. Dabei wird zum Überführen von dem ersten in einen zweiten Betriebszustand genauso wie beim Überführen von dem zweiten Betriebszustand in den ersten Betriebszustand der Stellmechanismus in die gleiche Richtung gedreht. Dadurch ist es nicht nötig, dass der Stellmechanismus zum Überführen von dem ersten Betriebszustand in den zweiten Betriebszustand in die eine Richtung und zum Zurückschalten von dem zweiten Betriebszustand in den ersten Betriebszustand der Stellmechanismus zurückgedreht werden muss. Es kann einfach weiter gedreht werden. Das ermöglicht eine einfache und kompakte Bedienung und Auswahl der Bedienelemente.

Alternativ ist es möglich, dass eine anmeldungsgemäße Fahrradeinrichtung eine Fahrradkomponente und eine daran aufgenommene Stelleinrichtung umfasst, welche in wenigstens zwei unterschiedlichen Stellpositionen zwei zugeordnete unterschiedliche Betriebszustände der Fahrradkomponente bewirkt. Dabei umfasst die Stelleinrichtung einen Stellmechanismus mit einer Kippmechanik, welche beim Betätigen von einer Kippposition in die bzw. eine andere Kippposition kippt. So kann durch eine einfache Betätigung ein jeweiliges Umschalten des Betriebszustandes ermöglicht werden. Grundsätzlich ist es dabei auch möglich, dass beispielsweise drei Positionen zur Verfügung gestellt werden. Beispielsweise eine neutrale Mittelstellung und eine Kippposition zu jeder Seite hin. Insbesondere kippt die Kippmechanik immer alternierend, sodass nach einer gewissen Anzahl an Betätigungen wieder der Ausgangzustand eingestellt ist. Das ist insofern analog zu der vorherigen Variante, bei der ein Endlosdrehen dasselbe bewirkt.

Auch eine solche Fahrradeinrichtung hat viele Vorteile.

In einer bevorzugten Weiterbildung aller Fahrradeinrichtungen umfasst die Fahrradkomponente wenigstens eine Federeinheit und/oder wenigstens eine Dämpfereinheit. Insbesondere kann die Fahrradkomponente dabei als Federgabel oder als Hinterraddämpfer ausgeführt sein. Möglich ist es auch, dass die Fahrradkomponente eine Sattelstütze ist. Eine Federgabel oder ein Hinterraddämpfer weisen regelmäßig wenigstens eine Federeinheit und wenigstens eine Dämpfereinheit auf, um Stöße nicht nur abzufedern, sondern auch zu dämpfen.

In vorteilhaften Weiterbildungen weist die Fahrradkomponente wenigstens drei einstellbare unterschiedliche Betriebszustände auf. Die wenigstens drei Betriebszustände sind wenigstens teilweise und vorzugsweise alle mit der Stelleinrichtung einstellbar.

In bevorzugten Weiterbildungen ist eine Drehbewegung des Stellmechanismus in eine Drehrichtung (insbesondere stufenweise und vorzugsweise gerastet) möglich. Insbesondere wird eine Drehbewegung in die eine und/oder die andere Drehrichtung zum Beispiel durch eine Fixiereinrichtung behindert. In eine der beiden Drehrichtungen kann eine Drehbewegung auch blockiert werden. Besonders bevorzugt wird eine Drehbewegung des Stellmechanismus in wenigstens eine Drehrichtung durch eine Fixiereinrichtung behindert.

Insbesondere ist an dem Stellmechanismus eine Einwegkupplung in der Art eines Freilaufs integriert. Ein solcher Freilauf kann beispielsweise durch miteinander zusammenwirkende Verzahnungen oder durch einen Klinkenfreilauf realisiert sein. In einfachen Ausgestaltungen wird eine Drehbewegung nur in eine Drehrichtung durch ein Fixierteil blockiert oder behindert oder gebremst. Möglich ist es, dass das Fixierteil als Blockierteil ausgeführt ist und eine Drehung in eine Drehrichtung blockiert. Möglich ist es aber auch, dass eine Drehbewegung in eine Drehrichtung oder in beide Drehrichtungen (nur) abgebremst oder (winkelabhängig stärker und schwächer) behindert wird.

In einfachen Ausgestaltungen umfasst die Fixiereinrichtung ein Fixierteil, welches (mit einer Vorspannbelastung) in eine Fixierstellung vorbelastet ist. In der Fixierstellung wird eine Drehung in wenigstens eine Drehrichtung gebremst.

Vorzugsweise ist das Fixierteil gegen eine Vorspannbelastung (einer geeigneten Vorspannfeder) aus einer fixierten Stellung oder sogar einer blockierten Stellung in eine Drehstellung überführbar, in welcher der Stellmechanismus (freier) drehbar ist. Dann kann der Stellmechanismus weiter gedreht werden. Wenn das Fixierteil als Blockierteil ausgeführt ist, wird bei dem Versuch, den Stellmechanismus zurückzudrehen, eine solche Drehbewegung regelmäßig durch das Blockierteil oder dergleichen verhindert. Möglich ist es aber auch, dass ein Rasten oder dergleichen in eine Drehrichtung oder in beide Drehrichtungen erfolgt. Dann kann ein Drehen in eine Drehrichtung oder in beide Drehrichtungen (z.B. gleich stark oder auch unterschiedlich stark) behindert bzw. (winkelabhängig) gebremst werden.

Solche Ausgestaltungen sind sehr vorteilhaft, da eine definierte Bewegung des Stellmechanismus gewährleistet wird. Eine Bewegung erfolgt regelmäßig nur in eine Drehrichtung und ist insbesondere in bestimmten Schritten oder Stufen. Vorteilhaft ist eine endlose Drehbarkeit (d.h., ohne einen Endanschlag).

In bevorzugten Weiterbildungen umfasst die Stelleinrichtung wenigstens ein Ventil, welches in einer ersten Stellung einen Strömungskanal (zum Beispiel) weiter öffnet als in einer zweiten Stellung. Es können auch weitere Zwischenstellungen möglich sein. So kann eine Strömungsverbindung über den Strömungskanal in einer Stellung weit geöffnet und in einer anderen Stellung vollständig blockiert werden. Auch Zwischenstellungen sind möglich. Eine vollständige Öffnung in einer Stellung ist bevorzugt. Eine vollständige Schließung in einer anderen Stellung ist bevorzugt.

In bevorzugten Ausgestaltungen stellt das Ventil in einer Stellung eine weichere (geringere) und in einer anderen Stellung eine härtere (stärkere) Dämpfung der Dämpfereinheit ein. Eine härtere Dämpfung eignet sich zum Beispiel für glatte Straßen und eine weichere Stellung für eine Fahrt durch das Gelände. In einer Stellung kann auch die Dämpfereinheit nahezu oder vollständig blockiert werden. Es ist denkbar, dass in einer Stellung eine Absenkung der Federgabel erfolgt, z.B. für steile Bergauffahrten.

In bevorzugten Ausgestaltungen weisen der Stellmechanismus und das Ventil eine gemeinsame Drehachse auf. Dann wird durch Drehung des Stellmechanismus wenigstens ein Teil des Ventils gedreht. So kann durch Drehung des Stellmechanismus ein Strömungskanal in dem Ventil teilweise oder vollständig geschlossen oder teilweise oder vollständig geöffnet werden.

In allen Ausgestaltungen ist es besonders bevorzugt, dass der Stellmechanismus in einer Mehrzahl von Winkelstellungen rastet. Vorzugsweise umfasst der Stellmechanismus ein Drehrad mit einer (insbesondere äußeren) und vorzugsweise abgerundeten Zahnkontur. Die Zahnkontur wirkt mit einer darin eingreifenden Rasteinheit zusammen. Die Rasteinheit kann zum Beispiel als Rasthebel ausgeführt sein und jeweils in die Lücke zwischen zwei Zähnen eingreifen. Vorzugsweise ist die Rasteinheit federnd aufgenommen und umfasst ein an die Zahnkontur angepasstes Rastende oder einen solchen Rastbereich. Das Rastende kann abgerundet ausgeführt sein, kann aber auch einen stumpfen oder spitzen Winkel aufweisen.

Die Zahnkontur und die Rasteinheit können auch z.B. direkt die Fixiereinrichtung bilden. Eine separate Fixiereinrichtung ist dann nicht unbedingt nötig. Eine in die Zahnkontur eingreifende Rasteinheit kann eine Drehung in eine Drehrichtung oder auch in beide Drehrichtungen behindern. Auch ein Verhindern einer Drehbewegung in eine der Drehrichtungen ist möglich.

Die Rasteinheit kann eine Blattfeder umfassen oder als eine solche ausgebildet sein. Das ermöglicht eine einfache und kostengünstige Ausgestaltung und Montage.

In bevorzugten Ausgestaltungen gibt der Stellmechanismus ein Signal in Form einer haptischen Rückmeldung, wenn ein anderer Betriebszustand erreicht wird. Das kann zum Beispiel darüber realisiert werden, dass beim Erreichen eines anderen Betriebszustandes die Rasteinheit mit dem angepassten Rastende entsprechend in die Zahnkontur eingreift. Der Rastvorgang führt zu einem haptischen Feedback, welches von dem Benutzer fühlbar ist.

Es ist möglich, dass kein (blockierendes) Blockierteil, sondern nur eine Rasteinheit als Fixierteil eingesetzt wird. Der Stellmechanismus funktioniert grundsätzlich auch ohne ein Blockieren in ein Drehrichtung. Das wurde getestet. Die Fixiereinrichtung kann deshalb ein Blockierteil und/oder eine Rasteinheit beinhalten.

In vorteilhaften Ausgestaltungen umfasst der Stellmechanismus ein Stellrad mit einer Stellradverzahnung. Insbesondere treibt ein Antriebsteil mit wenigstens einem Antriebszahn die Stellradverzahnung an.

In einfachen Ausgestaltungen reicht es aus, dass ein einzelner Antriebszahn bei Bedarf in die Stellradverzahnung eingreift und das Stellrad dreht, um einen anderen Betriebszustand einzustellen. Es ist möglich, dass der Antriebszahn hakenartig ausgebildet ist oder die Form eines Zughakens annimmt. Jedenfalls wird eine Bewegung des Antriebszahns auf die Stellradverzahnung übertragen.

Vorzugsweise dreht bei einer Zugbewegung des Antriebsteils von der Grundposition in eine Betätigungsposition der Antriebszahn das Stellrad (um einen bestimmten Winkel weiter). Dadurch wird ein definierter Betrieb ermöglicht, bei dem eine Betätigung des Antriebsteils für eine definierte Drehung des Stellrads sorgt.

Vorzugsweise ist das Antriebsteil in die Grundposition vorbelastet. Insbesondere wird das Antriebsteil automatisch aus der Betätigungsposition zurück in die Grundposition zurückgeführt. Vorzugsweise wird der Antriebszahn des Antriebsteils mit einem Federteil in eine Eingriffsposition vorbelastet. Dadurch wird sichergestellt, dass bei Betätigung eine zuverlässige Reaktion erfolgt.

In allen Ausgestaltungen ist es bevorzugt, dass der Antriebszahn bei der Rückführung des Antriebsteils von der Betätigungsposition in die Grundposition gegen die Kraft des Federteils von dem Stellrad weg verschwenkt wird. Das bedeutet, dass der Antriebszahn bei der Rückführung außer Eingriff mit der Stellradverzahnung gelangt. Dadurch wird eine Bewegung bei der Rückführung des Antriebsteils nicht auf den Stellmechanismus übertragen.

In den Ausgestaltungen, in denen eine Federeinheit in die Fahrradkomponente integriert ist, ist vorzugsweise eine Federkraft der Federeinheit einstellbar. Beispielsweise kann eine Zusatzfeder zu- oder abgeschaltet werden, um einen geeigneten Betriebszustand einzustellen. Dazu ist es bevorzugt, dass sich die (effektiv wirkende) Federkraft der Federeinheit in wenigstens zwei unterschiedlichen Winkelstellungen des Stellmechanismus unterscheidet. Beispielsweise kann eine zweite Federeinheit parallel oder in Reihe zugeschaltet oder abgeschaltet werden.

In allen Ausgestaltungen ist es bevorzugt, dass eine Bedieneinheit mit einem Tragteil und einem zwischen einer Ruhestellung und wenigstens einer Betätigungsstellung bewegbaren Bedienteil umfasst ist. Eine solche Bedieneinheit kann insbesondere auch entfernt von der Fahrradkomponente angeordnet werden. Beispielsweise ist es besonders bevorzugt, dass die Bedieneinheit an einem Lenker eines Fahrrads montierbar ist. Insbesondere ist die Bedieneinheit an einem Lenker montiert, der dann Bestandteil der Fahrradeinrichtung ist.

Vorzugsweise ist ein solcher Lenker weitgehend gerade oder besonders bevorzugt geschwungen als Rennlenker ausgebildet. Insbesondere ermöglicht der Lenker eine bequeme Bedienung aus wenigstens zwei unterschiedlichen Griffpositionen.

Vorzugsweise umfasst die Fahrradeinrichtung eine Federgabel und/oder einen Hinterraddämpfer als Fahrradkomponente. Die Stelleinrichtung ist an der Fahrradkomponente aufgenommen und die Bedieneinheit kann irgendwo an dem Fahrrad angeordnet werden. Insbesondere ist die Bedieneinheit an dem Lenker eines Fahrrads anordnenbar. Eine Federgabel kann z.B. absenkbar sein. Dann kann ein Betriebszustand ein abgesenkter und ein Betriebszustand der normale (weitgehend) ausgefahrene Betriebszustand sein. Ein (weiterer) Betriebszustand kann eine weichere Dämpfung und noch ein Betriebszustand kann eine hart eingestellte Dämpfung und/oder eine blockierte Dämpfung (Lockout) sein.

In vorteilhaften Ausgestaltungen ist das Bedienteil über wenigstens ein mechanisches Verbindungselement wie zum Beispiel einen Seilzug oder eine Hydraulikleitung mit dem Stellmechanismus verbunden. In einfachen Ausgestaltungen wird ein Seilzug als Verbindungselement eingesetzt, wobei an einem Ende des Seilzugs das Verbindungselement mit dem Antriebsteil und dem Antriebszahn gekoppelt ist. Das Verbindungselement umfasst insbesondere einen Bowdenzug und/oder eine Hydraulikleitung. Daran anschließen kann sich z.B. ein Stößel oder Stift zum Ankoppeln an den Stellmechanismus.

Vorzugsweise gibt der Stellmechanismus ein Signal in Form einer haptischen Rückmeldung über das mechanische Verbindungselement zurück an die Bedieneinheit, wenn ein anderer Betriebszustand erreicht wird. Dann kann der Benutzer an dem Hebel am Lenker spüren, wann ein anderer Betriebszustand erreicht wird. Das ist z.B. in lauterer Umgebung vorteilhaft.

Vorzugsweise wird das Bedienteil zum Umstellen eines Betriebszustandes von der Ruhestellung in die Betätigungsstellung bewegt. Vorzugsweise kehrt das Bedienteil nach dem Betätigen und Verändern einer Einstellung der Fahrradkomponente wieder in die Grundposition zurück. Dazu ist insbesondere eine Vorspanneinrichtung vorgesehen, die das Bedienteil in die Ruhestellung vorbelastet. So wird immer eine definierte Positionierung des Bedienteils gewährleistet. In solchen Ausgestaltungen wird bei jeder Umschaltung eines Betriebszustandes das Bedienteil jeweils von der Ruhestellung in die Betätigungsstellung bewegt. Der Stellmechanismus sorgt für ein Umschalten der Betriebszustände nacheinander.

Vorzugsweise werden beim wiederholten (und insbesondere identischen) Betätigen des Bedienteils von der Ruhestellung in die Betätigungsstellung an der Fahrradkomponente nacheinander unterschiedliche Betriebszustände abgewechselt bzw. eingestellt. Bei aufeinanderfolgenden Betätigungen werden die zur Verfügung stehenden Betriebszustände nacheinander angesteuert bzw. eingestellt oder durchgeschaltet.

Es ist möglich und bevorzugt, dass die Fahrradeinrichtung neben einer ersten Fahrradkomponente auch noch eine zweite Fahrradkomponente mit einer daran aufgenommenen zweiten Stelleinrichtung umfasst. Die zweite Stelleinrichtung umfasst einen daran aufgenommenen zweiten drehbaren Stellmechanismus. Es ist möglich, dass zwei Bedienteile verwendet werden. Bevorzugt ist es aber, dass ein einziges und gemeinsames Bedienteil verwendet wird, um zwei verschiedene Fahrradkomponenten anzusteuern. Das Bedienteil ist dann über ein zweites mechanisches Verbindungselement wie zum Beispiel einen Seilzug oder eine Hydraulikleitung mit dem zweiten Stellmechanismus verbunden. Dann kann zum Beispiel durch eine Bewegung des Bedienteils in eine erste Richtung die erste Fahrradkomponente angesteuert werden, während durch eine Bewegung des Bedienteils in eine zweite (unterschiedliche) Richtung eine zweite Fahrradkomponente angesteuert wird.

Vorzugsweise wird das Bedienteil zum Umstellen von Betriebszuständen der zweiten Fahrradkomponente von der Ruhestellung in eine zweite Betätigungsstellung bewegt. Dabei unterscheidet sich die zweite Betätigungsstellung von der ersten Betätigungsstellung.

Insbesondere wird das Bedienteil zum Umstellen von Betriebszuständen der zweiten Fahrradkomponente in eine Richtung bewegt, die gegenläufig und insbesondere entgegengesetzt zu einer Richtung einer Bewegung von der Ruhestellung in die erste Betätigungsstellung verläuft. So kann das Bedienteil zum Beispiel in eine Richtung verschwenkt werden, um einen Betriebszustand der ersten Fahrradkomponente zu verändern und in eine zweite Richtung verschwenkt werden um unabhängig von der ersten Fahrradkomponente einen Betriebszustand der zweiten Fahrradkomponente zu verändern.

Eine andere anmeldungsgemäße Fahrradeinrichtung umfasst wenigstens eine Fahrradkomponente mit (wenigstens) zwei unterschiedlichen und einstellbaren Betriebszuständen und eine an der Fahrradkomponente aufgenommene Stelleinrichtung zum Einstellen der Betriebszustände. Dabei umfasst die Stelleinrichtung einen Stellmechanismus, der für die beiden unterschiedlichen Betriebszustände jeweils eine unterschiedliche Stellposition aufweist. Die Stelleinrichtung umfasst (wenigstens) einen (und insbesondere mechanischen) Signalerzeuger (und/oder Geräuscherzeuger). (Erst) Beim Erreichen eines anderen Betriebszustandes erzeugt der Signalerzeuger (und/oder Geräuscherzeuger) ein (gezieltes und wahrnehmbares und) definiertes Signal (bzw. definiertes Geräusch). Insbesondere ist ein separater Geräuscherzeuger und/oder Signalerzeuger umfasst. Der Signalerzeuger oder wenigstens ein Signalerzeuger kann als Geräuscherzeuger ausgebildet sein. Der Signalerzeuger oder wenigstens ein Signalerzeuger kann auch haptische Signale ausgeben.

Auch eine solche anmeldungsgemäße Fahrradeinrichtung hat viele Vorteile. Ein erheblicher Vorteil besteht darin, dass dem Benutzer eine Rückkopplung gegeben wird, wenn der Benutzer beispielsweise das Bedienteil betätigt. Der Benutzer erhält ein Signal und vorzugsweise eine akustische und/oder haptische Rückkopplung genau dann, wenn ein anderer Betriebszustand erreicht wird. Nicht früher, was Fehlinformationen vermeidet. Und auch nicht später, sodass die Reaktion des Benutzers immer angemessen ist.

Besonders bevorzugt ist wenigstens ein (oder es sind alle) Signalerzeuger an dem Stellmechanismus ausgebildet.

Auch eine haptische Rückmeldung ist möglich und bevorzugt, die vorzugsweise an einem Bedienteil dann spürbar ist. Dann kann der Benutzer die Rückmeldung direkt spüren.

Es ist in einfachen Ausgestaltungen möglich, dass immer das gleiche Signal (z. B. Geräusch) ausgegeben wird, wenn in den nächsten Betriebszustand geschaltet wird. Es ist möglich und bevorzugt, dass ein zusätzliches und anderes Signal (z. B. Geräusch) ausgegeben wird, wenn das Bedienteil (z. B. der Hebel) wieder gelöst wird und in die Ruhestellung zurückkehrt. Das zeigt dann an, dass eine nächste Betätigung erfolgen kann.

Nachdem ein erstes Signal (Geräuschsignal und/oder Haptiksignal) ausgegeben wurde, wenn nach Betätigung der Betriebszustand erfolgreich gewechselt wurde, wird ein zweites Signal (Geräuschsignal und/oder Haptiksignal) ausgegeben, wenn das Bedienteil (z. B. der Hebel) wieder in der Ruhestellung (Ausgangslage) angelangt ist.

Vorzugsweise ist der Signalerzeuger ein mechanischer Signalerzeuger, der mechanisch (unmittelbar) (wenigstens) ein Signal (akustisch und/oder haptisch) erzeugt. Möglich ist es auch, ein Signal elektronisch zu übermitteln und anschließend umzuwandeln und ein Geräusch, ein haptisches Signal wie eine Vibration und/oder ein Lichtsignal zu erzeugen.

Das bedeutet, dass ein Signal und vorzugsweise ein Geräusch nicht (unbedingt) dann ausgelöst wird, wenn eine Betätigung erfolgt, sondern genau dann, wenn ein anderer Betriebszustand erreicht wird. Dadurch erhält der Benutzer eine größere Sicherheit, da er jederzeit weiß, in welchem Betriebszustand sich die Fahrradkomponente befindet. Das vermeidet eine unnötige mehrfache Betätigung und erhöht den Komfort und die Zufriedenheit des Benutzers. Wenn die Betätigung - aus welchen Gründen auch immer - nicht erfolgreich war, erhält der Benutzer kein falsches Signal.

Vorzugsweise ist der Stellmechanismus drehbar und wird bei der Überführung von einem ersten Betriebszustand in einen zweiten Betriebszustand in eine Drehrichtung und bei der Überführung von dem zweiten Betriebszustand in einen ersten Betriebszustand in dieselbe Drehrichtung weiter gedreht.

In allen Ausgestaltungen ist es bevorzugt, dass der Signalerzeuger beim Umschalten von unterschiedlichen Betriebszuständen unterschiedliche und definierte Signale (und insbesondere Geräusche) erzeugt. So kann der Signalerzeuger beispielsweise beim Umschalten von einem ersten in einen zweiten Betriebszustand ein erstes definiertes Signal (z. B. Geräusch mit einem helleren Ton) erzeugen. Beim Umschalten von dem zweiten Betriebszustand in einen anderen Betriebszustand kann ein zweites definiertes Signal (und z.B. Geräusch mit einem tieferen Ton) erzeugt werden. Besonders bevorzugt hängt das erzeugte Signal (Geräusch) von dem erreichten Betriebszustand ab. Das bedeutet, dass jedem Betriebszustand beispielsweise ein definiertes Signal (Geräusch, Haptik) zugeordnet ist. Das erzeugte Signal hängt dann nicht davon ab, aus welchem Betriebszustand umgeschaltet wird, sondern nur davon, welcher Betriebszustand erreicht wird.

Beispielsweise kann sich die Frequenz eines erzeugten Geräusches von der Frequenz eines anderen Geräusches unterscheiden. Möglich ist es auch, dass die Intensität (Lautstärke) oder Zusammensetzung eines erzeugten Geräuschs von dem erreichten Betriebszustand abhängt. Entsprechend können sich haptische Signale unterscheiden. Denkbar sind auch optische Signale mit unterschiedlicher Farbe, Intensität oder Blinkfrequenz.

Vorzugsweise wird ein definiertes Signal (insbesondere haptisches Signal oder Geräusch) durch einen Signalerzeuger erzeugt, welcher Bauteile aus einer Gruppe von Bauteilen umfasst, welche Zahnräder, Federelemente, Blattfedern, Glocken, Klöppel und Hohlkörper und andere Geräuscherzeuger umfasst.

In bevorzugten Ausgestaltungen kann beispielsweise eine Feder gegen ein Bauteil anschlagen oder daran reiben, wenn ein Betriebszustand erreicht wird. Durch unterschiedliche Auflagen auf dem Gegenstand oder durch Hohlkörper oder durch unterschiedlich gefüllte Hohlkörper können unterschiedliche Klangcharakteristiken von Geräuschen erzeugt werden, sodass der Benutzer anhand des Geräuschs erkennen kann, welcher Betriebszustand erreicht wurde.

In vorteilhaften Weiterbildungen ist es möglich, dass der oder ein Signalerzeuger noch weitere Zusatzfunktionen übernimmt. Beispielsweise ist es möglich, dass der Signalerzeuger auch als Blockierteil dient, um eine Drehbewegung des Stellmechanismus nur in eine Richtung zu gewährleisten.

In einfachen Ausgestaltungen kann der Signalerzeuger (z. B. Geräuscherzeuger) wenigstens zum Teil aus einer Blattfeder oder dergleichen bestehen, die außen auf einer Verzahnung beispielsweise des Stellrades ruht. Wenn das Stellrad weit genug gedreht ist, kann die Blattfeder beispielsweise in ein Tal zwischen zwei Zähnen der Stellradverzahnung hineinfedern und dort auf den Boden des "Tals" aufschlagen und dabei ein entsprechendes Signal (Geräusch) erzeugen, welches von der Tiefe des Tals und der Materialbeschaffenheit des Tals und der Blattfeder abhängt. Durch unterschiedliche Materialien und zum Beispiel unterschiedliche Tiefen der Täler können entsprechend unterschiedliche Geräusche und/oder Vibrationen erzeugt werden.

In allen Ausgestaltungen und Weiterbildungen kann ein Geräuscherzeuger als Signalerzeuger ausgeführt sein oder so bezeichnet werden, sodass in der gesamten Anmeldung der Begriff "Signalerzeuger" durch den Begriff "Geräuscherzeuger" ersetzt werden kann. Ein Signalerzeuger erzeugt entsprechend wahrnehmbare Signale. Ein solches Signal ist vorzugsweise akustisch und/oder haptisch. Denkbar sind auch (zusätzliche) optische oder elektrische Signale.

Vorzugsweise ist wenigstens ein Signalerzeuger umfasst. Vorzugsweise ist ein Bedienteil zur Betätigung des Stellmechanismus umfasst, welches zur Betätigung von einer Ruhestellung in eine Betätigungsstellung überführbar ist. Das Bedienteil kann als Taster oder Betätigungshebel oder dergleichen ausgeführt sein und ist insbesondere am Lenker montiert. Vorzugsweise gibt der Signalerzeuger (oder ein weiterer Signalerzeuger) wenigstens ein Signal aus, wenn das Bedienteil (nach einer Betätigung wieder) die Ruhestellung erreicht.

Ein solches (akustisches oder haptisches) Signal wird vorzugsweise unabhängig von dem Erfolg der Betätigung ausgegeben. So weiß der Benutzer nach dem Signal, dass er gegebenenfalls erneut betätigen kann, wenn das Umschalten z.B. nicht geklappt hat, oder auch, wenn der Benutzer in einen neuen anderen Betriebszustand umschalten möchte. Das ist ein Unterschied zu einem Signal nach dem Erreichen eines neuen Betriebszustandes. Deshalb unterscheiden sich die entsprechenden Signale vorzugsweise deutlich. So kann der Benutzer beim Erreichen eines neuen Betriebszustandes (Federgabel auf Lockout) ein erstes Signal wahrnehmen. Dazu hatte der Benutzer das Bedienteil betätigt. Nach dem Erreichen des neuen Betriebszustandes wird ein (erster) Typ eines Signals ausgegeben. Wenn das Bedienteil in Form z. B. eines Bedientasters oder eines Bedienhebels die Ruheposition wieder erreicht, wird ein (zweiter) Typ von Signal ausgegeben. Dann weiß der Benutzer, dass er das Bedienteil bei Bedarf wieder betätigen kann. Das ist z. B. - aber nicht nur - hilfreich, wenn das Bedienteil in zwei Richtungen verschwenkbar ist, um zwei separate Fahrradkomponenten anzusteuern.

In allen Ausgestaltungen wird die Erfindung besonders bevorzugt bei solchen Fahrzeugen und insbesondere Fahrrädern eingesetzt, die im normalen und regelmäßigen bestimmungsgemäßen Betrieb wenigstens teilweise muskelbetrieben werden. Insbesondere wird die Erfindung bei sportlichen Fahrrädern eingesetzt.

Weitere Vorteile und Merkmale der vorliegenden Erfindung ergeben sich aus den Ausführungsbeispielen, die im Folgenden mit Bezug auf die beiliegenden Figuren erläutert werden.

In den Figuren zeigen:
- Figur 1: eine schematische Darstellung eines Gravel-Bikes;
- Figur 2: eine schematische Darstellung eines Mountainbikes;
- Figur 3: eine schematische Vorderansicht einer Federgabel für ein Fahrrad gemäß Figur 1 oder 2;
- Figur 4: eine schematische vergrößerte Seitenansicht eines Ausschnitts des Lenkers des Fahrrads nach Figur 1;
- Figur 5: drei vergrößerte Ausschnitte der Federgabel nach Figur 3;
- Figuren 6a-6d: verschiedene vergrößerte Querschnitte der Stelleinrichtung einer erfindungsgemäßen Fahrradkomponente; und
- Figuren 7a-7d: weitere Ansichten der Stelleinrichtung nach den Figuren 6a-6d.

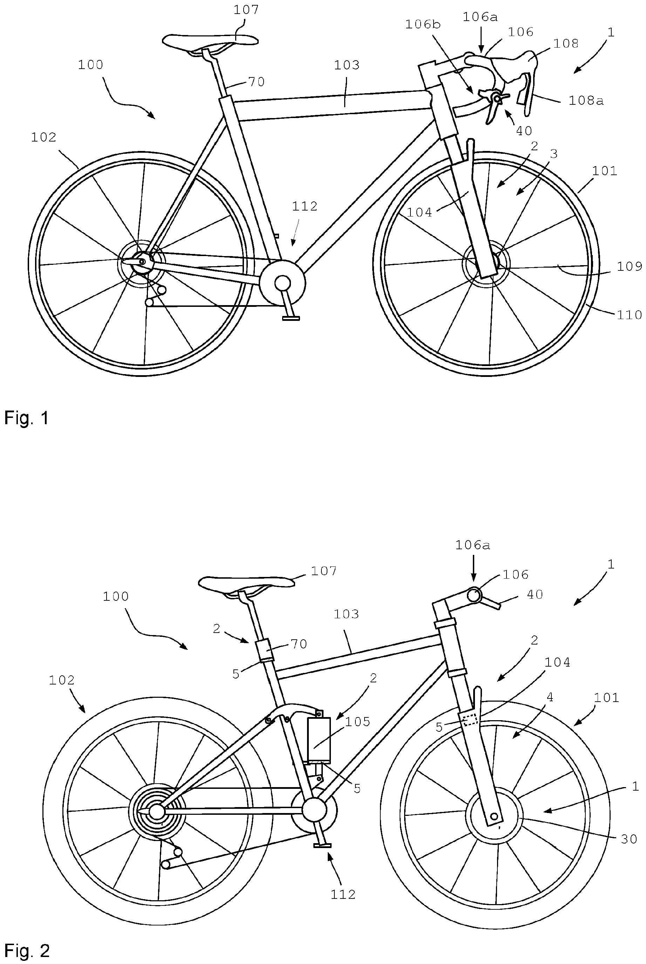

In den Figuren 1 und 2 sind jeweils ein Mountainbike bzw. ein Gravel-Fahrrad oder Rennrad 100 dargestellt, die jeweils mit erfindungsgemäßen Fahrradeinrichtungen 1 ausgerüstet sind. Das Mountainbike bzw. Rennrad 100 verfügt jeweils über ein Vorderrad 101 und ein Hinterrad 102.

Die beiden Räder 101, 102 verfügen über Speichen 109. Eine Ritzeleinrichtung 111 ist vorgesehen. Grundsätzlich können konventionelle Felgenbremsen oder auch andere Bremsen wie zum Beispiel Scheibenbremsen vorgesehen sein.

Die Fahrräder 100 verfügen jeweils über einen Rahmen 103, einen Lenker 106, einen Sattel 107, eine Gabel bzw. eine Federgabel 104 und im Falle des Mountainbikes oder gegebenenfalls einem Gravel-Fahrrad (Gravelbike) kann ein Hinterraddämpfer 105 vorgesehen sein. Zum Antrieb dient eine Tretkurbel 112 mit Pedalen.

Gegebenenfalls kann ein elektrischer Hilfsantrieb an der Tretkurbel 112 und/oder den Rädern vorgesehen sein. Die Nabe der Räder kann jeweils über eine Spanneinrichtung wie zum Beispiel eine Steckachse oder einen Schnellspanner an dem Rahmen befestigt sein.

Die beiden Fahrräder aus Figuren 1 und 2 weisen jeweils eine Federgabel 104 als Fahrradkomponente 2 auf. Die Betriebszustände 3, 4 der Fahrradkomponenten 2 der beiden Fahrräder 100 sind einstellbar. Dazu verfügen die beiden Fahrräder 100 jeweils am Lenker 106 über eine Bedieneinheit 40, mit der der Betriebszustand der Fahrradkomponenten 2 verändert werden kann.

Wie in Figur 1 zeigt, wird dort ein geschwungener Lenker bzw. Rennlenker 106 eingesetzt, bei dem im unteren gekrümmten Bereich die Bedieneinheit 40 montiert ist. Das führt dazu, dass bei dem Rennrad bzw. Gravelbike aus Figur 1 die Bedieneinheit 40 aus den beiden Haupt-Griffpositionen am Bremsgriff 108 und dem unteren Bereich bequem betätigbar ist. Die Bedieneinheit 40 kann sowohl aus der Griffposition 106a als auch aus der Griffposition 106b betätigt werden. Aus diesen Positionen kann auch der Bremshebel 108a am Bremsgriff 108 betätigt werden. Gegebenenfalls ist es möglich, dass mit der Bedieneinheit 40 auch eine höhenverstellbare bzw. absenkbare Sattelstütze 70 eingestellt wird.

An den Fahrradkomponenten 2 ist jeweils (unmittelbar) eine Einstelleinrichtung 5 aufgenommen, die durch den entfernt am Lenker 106 angeordneten Bedienhebel verstellbar ist.

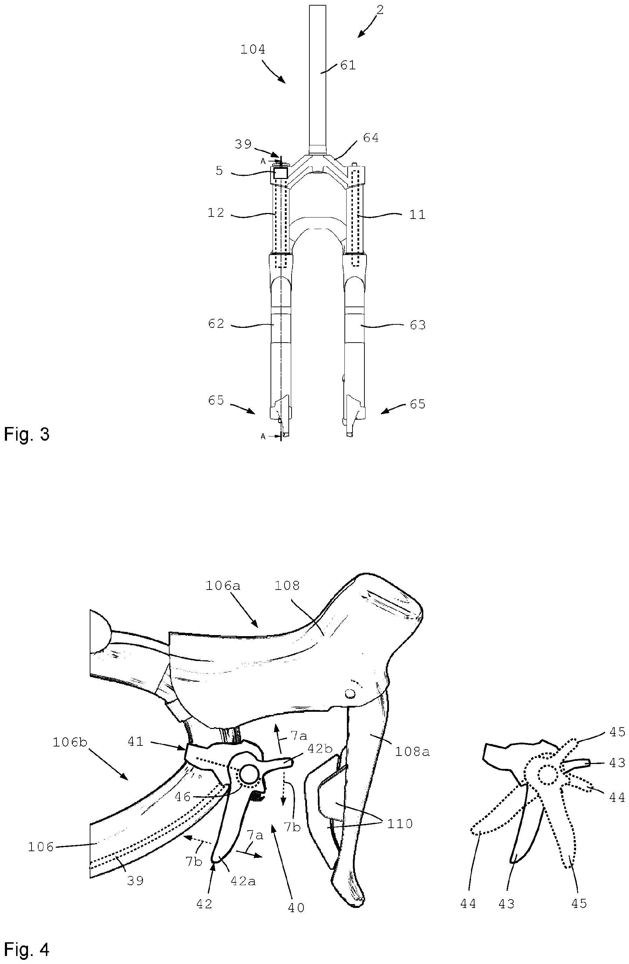

Figur 3 zeigt eine schematische Vorderansicht einer Federgabel 104 eines Fahrrads, wie es in Figuren 1 und 2 eingesetzt werden kann. Die Federgabel 104 verfügt über einen Gabelschaft 61 und zwei teleskopierbare Gabelbeine 62, 63. An dem jeweils unteren Ende ist ein Ausfallende 65 vorgesehen. Oben sind die beiden Gabelbeine 62 und 63 durch eine Gabelkrone 64 miteinander verbunden. Regelmäßig ist in einem der Gabelbeine eine Federeinheit 11 und in dem andern Gabelbein einen Dämpfereinheit 12 aufgenommen. Möglich ist es auch, dass die Federeinheit 11 und die Dämpfereinheit 12 gemeinsam in nur einem Gabelbein 62, 63 untergebracht sind.

Schematisch angedeutet ist in Figur 3 eine Stelleinrichtung 5 im oberen Bereich eines Gabelbeins 62. Die Stelleinrichtung 5 ist über ein mechanisches Verbindungselement 39 mit der Bedieneinheit 40 am Lenker 106 verbunden. Das Verbindungselement 39 kann die eigentliche Verbindungsleitung (Bowdenzug, Hydraulikleitung) und z.B. einen damit gekoppelten Stößel 39a oder dgl. umfassen. Möglich ist es auch, dass z.B. ein Bowdenzug direkt die Funktion übernimmt, sodass ein Stößel 39a oder dergleichen nicht benötigt wird. Durch die Betätigung der Bedieneinheit 40 wird das Verbindungselement 39 betätigt und dementsprechend eine Einstellung der Stelleinrichtung 5 verstellt.

Figur 4 zeigt eine vergrößerte Seitenansicht des Lenkers 106 mit dem Bremsgriff 108 und der an dem Rennlenker aufgenommenen Bedieneinheit 40. Die Bedieneinheit 40 verfügt über ein Tragteil 41, welches hier direkt an dem Lenker 106 befestigt wird. An dem Tragteil 41 ist das Bedienteil 42 aufgenommen, welches hier in verschiedene Positionen verschwenkt werden kann. Hier sind eingezeichnet die Ruhestellung 43 und eine erste und eine zweite Betätigungsstellung 44, 45, bei denen das Bedienteil 42 in die eine oder andere Schwenkrichtung verschwenkt wird. Zur besseren Übersichtlichkeit sind die Seilzüge als Verbindungselement 39 nicht eingezeichnet.

Das Verbindungselement 39 ist in vielen Fällen als Bowdenzug ausgeführt und hier nicht direkt sichtbar, da es in oder am oder beim Lenker geführt wird. Deshalb ist das Verbindungselement 39 hier gestrichelt dargestellt.

Klar erkennbar ist, dass sowohl aus der Griffposition 106a als auch aus der Griffposition 106b das Bedienteil 42 einfach bedienbar sind, wobei eine Verschwenkung hier in beide Drehrichtungen 7a, 7b möglich ist. Je nach Griffposition wird dabei das eine Ende 42a oder das andere Ende 42b des Bedienteils 42 mit dem Finger des Benutzers gegriffen und entsprechend verschwenkt. Die Erfindung erlaubt einen kompakten Aufbau, wobei mit einem Einstellhebel zwei verschiedene Fahrradkomponenten 2 bzw. deren Betriebszustände 3, 4 verstellt werden können.

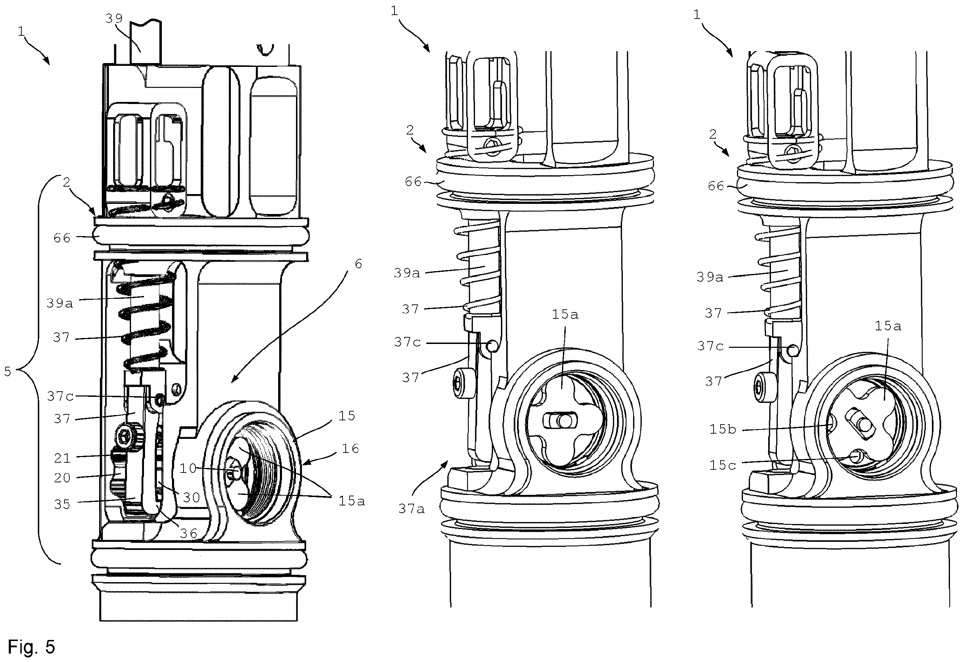

Figur 5 zeigt drei vergrößerte Ausschnitte des oberen Bereichs der Federgabel nach Figur 3 in drei leicht unterschiedlichen Stellungen, wobei hier das äußere Gabelbein weggelassen wurde, um einen Einblick in den inneren Aufbau zu ermöglichen. Der dargestellte Abschnitt wird im oberen Bereich des Gabelbeins aufgenommen und über Dichtungen 66 nach außen abgedichtet. Der hier jeweils sichtbare Abschnitt nimmt die Stelleinrichtung 5 auf. Von oben wird das Verbindungselement 39 zugeführt, welches im Inneren der Stelleinrichtung 5 nur zum Teil erkennbar ist. Eine Vorbelastungseinrichtung 37 belastet das Verbindungselement 39 in die in Figur 5 links dargestellte Grundposition 37a vor.

Am Ende des Verbindungselements 39 ist hier ein um die Schwenkachse 37c schwenkbares Antriebsteil 35 mit einem Antriebszahn 35 vorgesehen. Der Antriebszahn 36 kann auch als Antriebshaken bezeichnet werden. Jedenfalls steht von dem Antriebsteil 35 ein Haken oder Antriebszahn 36 ab, um das hier nicht näher zu erkennende Stellrad 30 bei Betätigung zu drehen.

Die Stelleinrichtung 5 umfasst einen Stellmechanismus 6 mit einer zentralen Drehachse 9. Um die Drehachse 9 herum ist das Drehrad 20 drehbar aufgenommen. Ebenso ist das Stellrad 30 drehbar um die Drehachse 9 angeordnet. Hier drehen das Drehrad 20, das Stellrad 30 und die Ventilflügel 15a des Ventils 15 synchron miteinander und um die Drehachse 9 herum. Das Drehrad 20 und das Stellrad 30 können einstückig ausgebildet sein.

Die Stelleinrichtung 5 ist hier in Figur 5 links in der Grundposition 37a dargestellt. Beispielsweise ist der Betriebszustand 3 eingestellt. In diesem Betriebszustand kann beispielsweise eine Dämpfereinheit 12 so eingestellt sein, dass eine größere Dämpfung erfolgt. Eine solche Stellung ist in der rechten Abbildung von Figur 5 zu sehen, wo die Ventilöffnungen 15b und 15c nicht durch die Ventilflügel 15a abgedeckt und verschlossen werden, sondern hier vollständig geöffnet sind und somit eine Strömungsverbindung zur Verfügung stellen.

In der mittleren Abbildung von Figur 5 befinden sich die Ventilflügel hier in einer solchen Drehstellung, dass die Ventilöffnungen 15b und 15c durch die Ventilflügel 15a vollständig verschlossen sind, sodass ein Durchfluss unterbunden wird. Zusätzlich ist auch eine Drehstellung möglich, in der eine Ventilöffnung oder beide Ventilöffnungen 15b, 15c teilweise verschlossen sind. Möglich ist auch eine Stellung, bei der noch - oder nur - weitere größere oder kleinere Ventilöffnungen freigegeben oder verschlossen sind, um weitere Einstellungen zu erlauben.

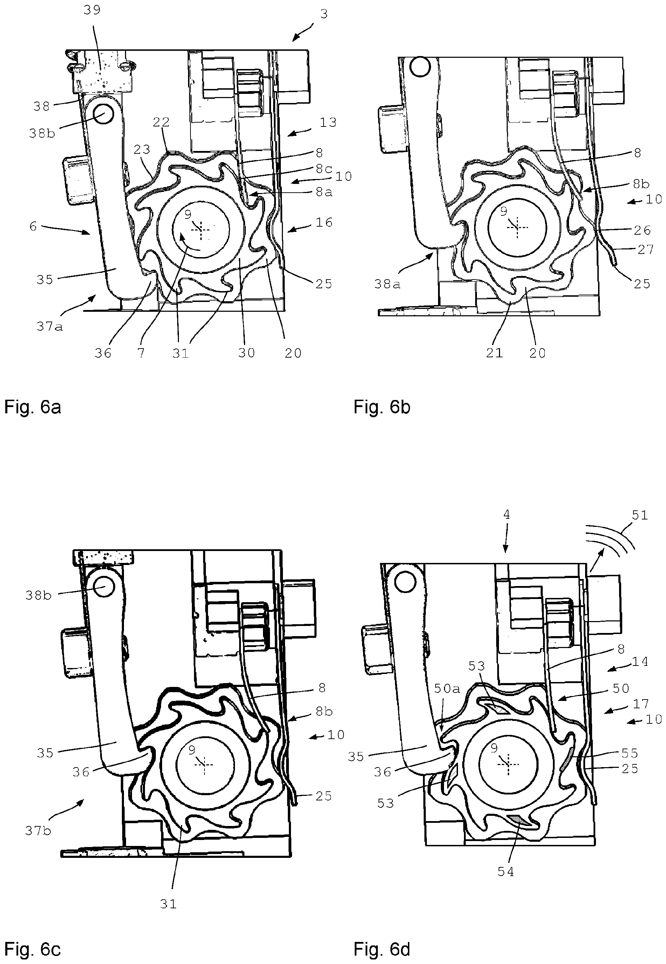

In den Figuren 6a bis 6d sind verschiedene vergrößerte Seitenansichten des Stellmechanismus 6 der Stelleinrichtung 5 abgebildet. Dabei wird das Verbindungselement 39 jeweils im linken oberen Bereich zugeführt. Das Verbindungselement 39 ist am Ende mit dem Antriebsteil 35 verbunden, welches um eine Schwenkachse 38b schwenkbar aufgenommen ist. Um die zentrale Drehachse 9 herum sind das (kleinere) Stellrad 30 mit der zum Antrieb dienenden Stellradverzahnung 31 und das Drehrad 20 drehbar angeordnet. Das Drehrad 20 verfügt über eine äußere Zahnkontur 21 mit abgerundeten Zähnen, die sozusagen "Berge" 22 und dazwischen "Täler" 23 bilden.

Eine Rasteinheit 25, die hier als Blattfeder ausgeführt ist, liegt mit einem Rastende 26 etwa formschlüssig an einem Zahnverlauf der Zahnkontur 21 an. Es bildet sich dort ein Formschluss, bei dem aber durch einen geringen Kraftaufwand ein Weiterdrehen in die Drehrichtung 7 möglich ist. Diese Rasteinheit 25 kann zusammen mit der Zahnkontur 21 die Fixiereinrichtung 10 bilden und für eine Drehung in eine Drehrichtung sorgen.

Beim Weiterdrehen wird die Rasteinheit 25 nach außen ausgelenkt, sodass ein leicht erhöhter Widerstand beim Drehen bemerkt werden kann. Wenn der "Berg 22" überwunden ist setzt sich das Rastende 26 automatisch in das nächste Tal 23, sodass ein haptisches Feedback für den Benutzer fühlbar ist.

Den Ablauf bei der Drehbewegung von einer ersten Stellung bzw. Winkelstellung 16 in eine zweite Stellung bzw. Winkelstellung 17 zeigen die Figuren 6a, 6b, 6c und 6d.

Dargestellt ist ein Verlauf bei einer Betätigung des Bedienteils 42, wobei das Antriebsteil 35 nach oben gezogen wird und der Antriebszahn 36 in die Stellradverzahnung 31 des Stellrads 30 eingreift und durch die Bewegung des Antriebsteils 35 um einen bestimmten Winkel weiter gedreht wird. Die Abmessungen sind hier so, dass bei jeder Betätigung des Bedienteils 42 das Stellrad 30 um einen Winkel von 45° weiter gedreht wird. Insgesamt ergeben sich acht Winkelpositionen, in denen die Rasteinheit 25 mit dem Rastende 26 eingreift. Dabei wechseln sich hier im Ausführungsbeispiel die Betriebszustände 3, 4 jeweils ab. Möglich ist es auch, dass sich drei oder vier oder mehr unterschiedliche Betriebszustände nacheinander abwechseln. Der Stellmechanismus 6 ist jedenfalls endlose drehbar angeordnet, sodass hier bei jeder Betätigung des Bedienteils 42 das Stellrad 30 um 45° weiter gedreht wird.

Wie Figur 6a zeigt, ist in der Grundposition 37 der Antriebszahn 36 des Antriebsteils 35 außer Eingriff mit den Zähnen 31 der Stellradverzahnung. Beim Betätigen des Bedienteils 42 gerät der Antriebszahn 36 in Eingriff mit der Stellradverzahnung und dreht das Stellrad 30 entsprechend weiter.

Beim Zurückstellen des Antriebsteils 35 verschwenkt das Antriebsteil 35 um die Drehachse 38b nach außen, sodass der Betriebszustand unverändert bleibt.

In Figur 6d sind zusätzlich Akustikeinheiten 53-55 eingezeichnet, die die abgegebenen Geräusche 51 beeinflussen oder erzeugen können.

In einer einfachen Ausgestaltung dient das Fixierteil 8 nicht nur zur Verhinderung eines rückwärts drehen des Stellrades 30, sondern dient auch als Signalerzeuger 50. Der Signalerzeuger 50 umfasst hier eine Blattfeder, die bei dem Drehvorgang etwa bei der Darstellung nach Figur 6c aus dem in Figur 6c dargestellten vorgespannten Zustand in einen entspannten Zustand übergeht, wobei das untere Ende der Blattfeder auf den Boden des Stellrades zwischen zwei Verzahnungen der Stellradverzahnung 31 auftrifft. In einfachen Ausgestaltungen wird somit bei jedem Umschaltvorgang jeweils das gleiche Signal und hier Geräusch erzeugt. Das Signal kann ein Geräusch umfassen. Das Signal kann auch haptisch an das Bedienteil zurückgegeben werden, wo der Benutzer es mit seinem Finger direkt spüren kann. Der Signalerzeuger 50 arbeitet insbesondere mechanisch und ist vorzugsweise in die Stelleinrichtung 5 integriert.

Möglich ist es auch, dass unterschiedlichen Betriebszuständen 3, 4 unterschiedliche Signale und/oder Geräusche 51 zugeordnet werden. Dazu kann beispielsweise das Stellrad 30 an entsprechenden Positionen entsprechende Hohlräume oder gefüllte Hohlräume oder Auflagen aus anderen Materialien aufweisen, um die Akustik oder haptische Rückmeldung entsprechend zu beeinflussen. Auch die Generierung bzw. Auslösung von elektrischen Signalen ist möglich, die zur entfernten Verarbeitung und Auslösung von optischen oder akustischen Signalen eingesetzt werden.

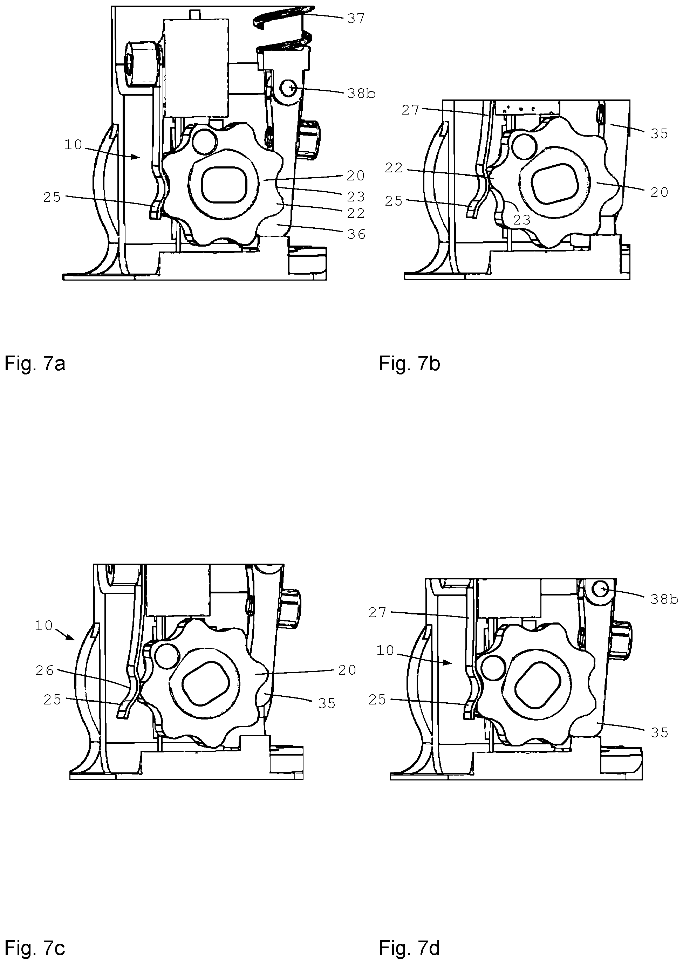

Die Figuren 7a bis 7d zeigen schematische und vergrößerte Ansichten des Stellmechanismus 6 der Stelleinrichtung 5 von der gegenüberliegenden Seite, also von der Seite, die von Figur 6a bis 6d nicht zugänglich ist. Klar erkennbar ist die Rasteinheit 25 mit dem Rastende 26, die in Figur 7 formschlüssig an dem Stellrad 30 anliegt.

In einfachen Ausgestaltungen dient die Rasteinheit 25 zusammen mit der Zahnkontur 21 direkt als Fixiereinrichtung 10. Die in einem Tal 23 anliegende Rasteinheit 25 bremst (winkelabhängig) eine Drehbewegung des Drehrades 20 (und damit auch ein Drehen des drehbaren Teils des Ventils 15) zunächst ab, bis der Berg 22 erreicht ist und die Rastung aufgehoben ist. Dieser Mechanismus kann auch alleine eine definierte Drehung des Stellmechanismus gewährleisten. Insbesondere wenn auf ein mechanisches Signal des anschlagenden Fixierteils 8 nach einem Umschalten eines Betriebszustandes verzichtet werden kann. Das Signal kann auch elektronisch oder anders mechanisch erzeugt werden.

Wie in den Figuren 7a, 7b, 7c und 7d zu erkennen, wird die Rasteinheit 25 zunächst nach außen ausgelenkt, bevor sie in Figur 7d schließlich wieder formschlüssig an der Zahnkontur 21 anliegt.

Insgesamt stellt die Erfindung eine vorteilhafte Fahrradeinrichtung 1 zu Verfügung, die es ermöglicht, dass ein Taster-Bedienteil zur Verstellung eines Betriebszustands einer Fahrradkomponente 2 eingesetzt wird. Dabei können beispielsweise Fahrmodi an einer Federgabel einfach vom Lenker aus verstellt werden. Der Stellmechanismus ist dabei so realisiert, dass bei jeder weiteren Betätigung der Bedieneinheit das Bedienteil wieder in die Ausgangsstellung zurückkehrt und für eine erneute Betätigung gut zugänglich und bereit ist. Der Stellmechanismus ist so realisiert, dass bei jeder weiteren Betätigung in den nächsten Betriebszustand umgeschaltet wird.

Neben der Ansteuerung von beispielsweise einer Federgabel ist es auch möglich, eine absenkbare Sattelstütze anzusteuern bzw. eine Funktion zu integrieren, um eine Sattelstütze abzusenken. Dabei ist es möglich, dass mit einem einzigen Bedienteil sowohl eine Fahrmodusverstellung einer Federgabel als auch eine Ansteuerung einer anderen Fahrradkomponente 2 erfolgt.

So kann aus einer neutralen Mittelposition beispielsweise in eine Drehrichtung eine Federgabel verstellt werden, während in der andern Dreh- bzw. Schwenkrichtung die Sattelstützenhöhe verstellt wird. Dazu können dann zwei Verbindungselemente oder Kabel an dem Bedienteil 42 bzw. der Bedieneinheit 40 angeschlossen werden, wobei dann das eine gezogen wird, wenn der Hebel im Uhrzeigersinn gedreht wird und das andere, wenn in entgegengesetzter Richtung gedreht wird.

Bei der Einstellung eines Betriebszustands eines Dämpfers oder einer Federgabel kann ein Ventil beispielsweise teilweise oder vollständig geöffnet oder verschlossen werden. Bei jeder Betätigung des Bedienteils 42 werden die einzelnen Betriebszustände der jeweiligen Fahrradkomponente 2 entsprechend durchgeschaltet. Das ist ein Prinzip analog zu einem Kugelschreiber, bei dem die Mine zum Schreiben herausgedrückt oder beim erneuten Betätigen wieder eingezogen wird. Entsprechend können analog mehrere Betriebszustände durchgeschaltet werden.

In allen Ausgestaltungen ist es auch möglich, dass als Antriebsteil Rastscheiben oder dergleichen eingesetzt werden. Möglich ist auch ein Klinkensystem. Denkbar ist es auch, dass ein Kabelzug direkt auf eine Scheibe angebracht wird. Als Rückstellfeder kann auch eine Rotations- oder Zugfeder eingesetzt werden.

In allen Ausgestaltungen ist es besonders bevorzugt, dass bei einer Dämpfereinheit 12 eine Entkopplung des Ventils von dem Verbindungselement 39 erfolgt. Das kann darüber erfolgen, dass bei der Betätigung des Bedienteils 42 der Benutzer mit seinem Finger bzw. mit seiner Fingerkraft die Reibung des Kabelzugs und die Reibung aller Dichtungen und die Kraft der Rückstellfeder überwinden muss. Zum Zurückführen nach der Betätigung muss bei der Erfindung die Rückstellfeder nicht so stark ausgelegt werden.

Die Rückstellfeder muss lediglich die Haftreibung des Kabels übernehmen und nicht die große Haftreibung des Ventils.

Ein weiterer Vorteil besteht darin, dass der Benutzer ein Signal in Form z.B. eines haptischen und/oder akustischen Feedbacks bekommt, wenn erfolgreich ein Betriebszustand umgestellt wurde. Das ist hier vorteilhaft, insbesondere, da die Rückmeldung direkt an beispielsweise die Stellung eines Ventils gekoppelt ist, sodass die erfolgreiche Rückmeldung nur dann erfolgt, wenn der Betriebszustand auch wirklich erfolgreich umgeschaltet wurde.

Bei Rückkehr des Bedienteils 42 in die Ruhestellung 43 wird ebenfalls ein (anderes und unterscheidbares) Signal ausgelöst, sodass der Benutzer weiß, dass er das Bedienteils 42 bei Bedarf wieder betätigen kann. Dieses Signal wird durch (einen anderen und hier) den (zweiten) Signalerzeuger 50a erzeugt. Der Signalerzeuger 50a wird hier durch das Stellrad 30 (und insbesondere dessen Stellradverzahnung 31) und das Antriebsteil 35 (und insbesondere dessen Antriebszahn 36) gebildet. Bei Rückkehr des Bedienteils 42 in die Ruhestellung 43 schlägt vorzugsweise das Antriebsteil 35 (Antriebszahn 36) auf das Stellrad 30, wenn es über einen Zahn der Stellradverzahnung 31 zurückspringt. Das erzeugt ein Signal und vorzugsweise ein deutlich wahrnehmbares Geräusch, welches vom Benutzer unterscheidbar wahrgenommen werden kann.

### Bezugszeichenliste:

| | | | |
|---|---|---|---|
| 1 | Fahrradeinrichtung | 38a | Eingriffsposition |
| 2 | Fahrradkomponente | 38b | Schwenkachse |
| 3, 4 | Betriebszustand | 39 | Verbindungselement |
| 5 | Stelleinrichtung | 39a | Stößel |
| 6 | Stellmechanismus | 40 | Bedieneinheit |
| 7 | Drehrichtung | 41 | Tragteil |
| 7a, 7b | Drehrichtung | 42 | Bedienteil |
| 8 | Fixierteil | 42a,b | Ende |
| 8a | Fixierstellung | 43 | Ruhestellung |
| 8b | Drehstellung | 44 | 1. Betätigungsstellung |
| 8c | Fixierfeder | 45 | 2. Betätigungsstellung |
| 9 | Drehachse | 46 | Vorspanneinrichtung |
| 10 | Fixiereinrichtung | 50,50a | Signalerzeuger |
| 11 | Federeinheit | 51 | Signal, Geräusch |
| 12 | Dämpfereinheit | 53-55 | Akustikeinheit |
| 13 | Stellposition | 61 | Gabelschaft |
| 14 | Stellposition | 62, 63 | Gabelbein |
| 15 | Ventil | 64 | Gabelkrone |
| 15a | Ventilflügel | 65 | Ausfallende |
| 15b,c | Ventilöffnung | 66 | Dichtung |
| 16, 17 | Stellung, Winkelstellung | 70 | absenkbare Sattelstütze |
| 20 | Drehrad | 100 | Fahrrad |
| 21 | Zahnkontur | 101 | Rad, Vorderrad |
| 22 | Berg | 102 | Rad, Hinterrad |
| 23 | Tal | 103 | Rahmen |
| 25 | Rasteinheit | 104 | Gabel, Federgabel |
| 26 | Rastende | 105 | Hinterraddämpfer |
| 27 | Blattfeder | 106 | Lenker |
| 30 | Stellrad | 106a | Griffposition |
| 31 | Stellradverzahnung | 106b | Griffposition |
| 35 | Antriebsteil | 107 | Sattel |
| 36 | Antriebszahn | 108 | Bremsgriff |
| 37 | Vorbelastungseinrichtung | 108a | Bremshebel |
| 37a | Grundposition von 36 | 109 | Speiche |
| 37b | Betätigungsposition | 110 | Schalthebel |
| 37c | Schwenkachse | 111 | Ritzeleinrichtung |
| 38 | Federteil | 112 | Tretkurbel |

## Patentansprüche

1. Fahrradeinrichtung (1) mit einer Fahrradkomponente (2) mit zwei einstellbaren unterschiedlichen Betriebszuständen (3, 4) und einer an der Fahrradkomponente (2) aufgenommenen Stelleinrichtung (5) zum Einstellen der Betriebszustände, wobei die Stelleinrichtung (5) ein Ventil (15) umfasst, welches in einer ersten Stellung (16) einen Strömungskanal (18) weiter öffnet als in einer zweiten Stellung (17),
**dadurch gekennzeichnet,**
**dass** die Stelleinrichtung (5) einen drehbaren Stellmechanismus (6) umfasst, der für die unterschiedlichen Betriebszustände (3, 4) jeweils eine unterschiedliche Stellposition (13, 14) aufweist, sodass von einem ersten Betriebszustand (3) zu einem zweiten Betriebszustand (4) in eine Drehrichtung (7) und von dem zweiten Betriebszustand (4) in dieselbe Drehrichtung (7) zu dem ersten Betriebszustand (3) weiter gedreht werden kann.

2. Fahrradeinrichtung (1) nach Anspruch 1, wobei die Fahrradkomponente (2) wenigstens eine Federeinheit (11) und/oder Dämpfereinheit (12) umfasst.

3. Fahrradeinrichtung (1) nach Anspruch 1 oder 2, wobei eine Drehbewegung des Stellmechanismus (6) in wenigstens eine Drehrichtung (7) durch eine Fixiereinrichtung (10) behindert wird und wobei die Fixiereinrichtung (10) ein Fixierteil (8, 25) umfasst, welches mit einer Vorspannbelastung in eine Fixierstellung (8a) vorbelastet ist.

4. Fahrradeinrichtung (1) nach einem der vorhergehenden Ansprüche, wobei das Ventil (15) der Stelleinrichtung (5) in einer Stellung (16) eine weichere und in einer anderen Stellung (17) eine härtere Dämpfung der Dämpfereinheit (12) einstellt.

5. Fahrradeinrichtung (1) nach einem der beiden vorhergehenden Ansprüche, wobei der Stellmechanismus (6) und das Ventil (15) eine gemeinsame Drehachse (9) aufweisen, wobei der Stellmechanismus (6) in einer Mehrzahl von Winkelstellungen (16, 17) rastet.

6. Fahrradeinrichtung (1) nach dem vorhergehenden Anspruch,
wobei der Stellmechanismus (6) ein Drehrad (20) mit einer Zahnkontur (21) umfasst, welches mit einer in die Zahnkontur (21) eingreifenden Rasteinheit (25) zusammenwirkt und wobei die Rasteinheit (25) federnd aufgenommen und ein an die Zahnkontur (21) angepasstes Rastende (26) umfasst.

7. Fahrradeinrichtung (1) nach einem der vier vorhergehenden Ansprüche, wobei der Stellmechanismus (6) ein Signal als Rückmeldung gibt, wenn ein anderer Betriebszustand (3, 4) erreicht wird.

8. Fahrradeinrichtung (1) nach einem der vorhergehenden Ansprüche, wobei der Stellmechanismus (6) ein Stellrad (30) umfasst, welches eine Stellradverzahnung (31) aufweist, und wobei ein Antriebsteil (35) mit wenigstens einem Antriebszahn (36) die Stellradverzahnung (31) antreibt, und wobei bei einer Zugbewegung des Antriebsteils (35) von der Grundposition (37a) in eine Betätigungsposition (37b) der Antriebszahn (36) das Stellrad (30) dreht.

9. Fahrradeinrichtung (1) nach dem vorhergehenden Anspruch,
wobei das Antriebsteil (35) mit einer Vorbelastungseinrichtung (37) in die Grundposition (37a) vorbelastet ist und aus der Betätigungsposition (37b) automatisch in die Grundposition (37a) rückgeführt wird, und wobei der Antriebszahn (36) des Antriebsteils (35) mit einem Federteil (38) in eine Eingriffsposition (38a) vorbelastet ist,
und wobei der Antriebszahn (36) bei der Rückführung des Antriebsteils (35) von der Betätigungsposition (37b) in die Grundposition (37a) gegen die Kraft des Federteils (38) von dem Stellrad (30) weg verschwenkt wird.

10. Fahrradeinrichtung (1) nach einem der vorhergehenden Ansprüche ab Anspruch 2, wobei eine Federkraft der Federeinheit (11) einstellbar ist,
und wobei sich die Federkraft der Federeinheit (11) in wenigstens zwei unterschiedlichen Winkelstellungen (16, 17) des Stellmechanismus (6) unterscheidet.

11. Fahrradeinrichtung (1) nach einem der vorhergehenden Ansprüche, umfassend einen Lenker (106) und eine Bedieneinheit (40) mit einem Tragteil (41) und einem zwischen einer Ruhestellung (43) und wenigstens einer Betätigungsstellung (44) bewegbaren Bedienteil (42), wobei die Bedieneinheit (40) an dem Lenker (106) montiert ist, wobei das Bedienteil (42) über wenigstens ein mechanisches Verbindungselement (39) wie z.B. einen Seilzug oder eine Hydraulikleitung mit dem Stellmechanismus (6) verbunden ist, wobei das Verbindungselement (39) mit dem Antriebsteil (35) und dem Antriebszahn (36) gekoppelt ist.

12. Fahrradeinrichtung (1) nach dem vorhergehenden Anspruch, wobei der Lenker (106) weitgehend gerade oder geschwungen als Rennlenker ausgebildet ist und eine Bedienung aus wenigstens zwei unterschiedlichen Griffpositionen (106a, 106b) ermöglicht.

13. Fahrradeinrichtung (1) nach einem der beiden vorhergehenden Ansprüche, umfassend eine Federgabel (104) und/oder einen Hinterraddämpfer (105) als Fahrradkomponente (2), wobei die Stelleinrichtung (5) an der Fahrradkomponente (2) aufgenommen ist und wobei die Bedieneinheit (40) an dem Lenker (106) eines Fahrrads (100) anordnenbar ist.

14. Fahrradeinrichtung (1) nach einem der vorhergehenden Ansprüche, wobei das Bedienteil (42) zum Umstellen des Betriebszustandes von der Ruhestellung (43) in die Betätigungsstellung (44) bewegt wird und wobei beim wiederholten Betätigen des Bedienteils (42) von der Ruhestellung (43) in die Betätigungsstellung (44) an der Fahrradkomponente (2) nacheinander unterschiedliche Betriebszustände (3, 4) abwechseln/eingestellt werden.

15. Fahrradeinrichtung (1) nach einem der vorhergehenden Ansprüche, umfassend eine zweite Fahrradkomponente (2a) mit einer daran aufgenommenen zweiten Stelleinrichtung (5a) mit einem daran aufgenommenen zweiten drehbaren Stellmechanismus (6a), wobei das Bedienteil (42) über ein zweites mechanisches Verbindungselement (39a) wie z.B. einen Seilzug oder eine Hydraulikleitung mit dem zweiten Stellmechanismus (6a) verbunden ist,
und wobei das Bedienteil (42) zum Umstellen von Betriebszuständen (3, 4) der zweiten Fahrradkomponente (2a) von der Ruhestellung (43) in eine zweite Betätigungsstellung (45) bewegt wird,
und wobei das Bedienteil (42) zum Umstellen von Betriebszuständen (3,4) der zweiten Fahrradkomponente (2a) in eine Richtung (7b) bewegt wird, die gegenläufig zu einer Richtung (7a) einer Bewegung von der Ruhestellung (43) in die erste Betätigungsstellung (44) verläuft.
